(19) **Europäisches Patentamt**
**European Patent Office**
**Office européen des brevets**

(11) Veröffentlichungsnummer: **0 060 229**
**A2**

(12) # EUROPÄISCHE PATENTANMELDUNG

(21) Anmeldenummer: 82830047.5

(22) Anmeldetag: 05.03.82

(51) Int. Cl.³: **C 05 F 9/02**

(30) Priorität: 09.03.81 IT 4798181

(43) Veröffentlichungstag der Anmeldung:
15.09.82 Patentblatt 82/37

(84) Benannte Vertragsstaaten:
AT BE CH DE FR GB LI LU NL SE

(71) Anmelder: Sorain Cecchini S.p.A.
Via Bruxelles, 53
I-00198 Rome(IT)

(72) Erfinder: Cerroni, Manlio
Via Bruxelles 51
Rom(IT)

(74) Vertreter: Sneider, Massimo
Lenzi & C. Via del Tritone 201
I-00187 Roma(IT)

(54) **Maschine zum Beleben von organischem Material in Reifetennen.**

(57) Eine Maschine zum Beleben des organischen Materials in Reifetennen, bestehend aus zwei oberhalb untereinander verbundenen Kopfteilen (1,2), welche jeweils mit einem Motor (13) für die Translation während des Arbeitshubes und mit einem Motor (6) für die Translation während des Rückhubes versehen sind, sowie aus einem Rotor (9), welcher mit Eindringungsorganen (30) im Bett des organischen Materials bestückt ist und von einem eigenen Aggregat (20) in Umdrehung versetzt wird. Der Satz, welcher den beiden Kopfteilen (1,2) die Arbeitsbewegung überträgt, ist aus einem Getriebemotor (13) und einem vorzugsweise gummibereiften Rad (7) mit rückwirkungsfreier Verbindung gebildet. Der Rotor (9) besteht aus einer Reihe von längs der Drehwelle (10) distanzierten und untereinander mittels an der Peripherie dieser Räder angeordneten Achsen (31) verbundenen Rädern, welche Achsen (31) auf ihnen Spiralfedern (32) aufnehmen, von denen ein freies Ende (30) mit dem zu behandelnden organischen Material in Berührung kommt und das andere Ende mit einem der Enden der Feder (32), welche auf der zur vorgenannten ersten Achse (31) parallelen benachbarten Achse (31) angeordnet und um einen halben Schritt versetzt ist, ein alleiniges Ganzes bildet.

SORAIN CECCHINI S.p.A. , Rom (Italien) .                    -

"Maschine zum Beleben von organischem Material in

Reifetennen"

Beschreibung :

Das Problem den festen Stadtmüll zu behandeln um die Anhäufung desselben zu vermeiden und gleichzeitig das verwertbare Material zurückzugewinnen ist ein Problem , dem alle Verantwortlichen der öffentlichen Angelegenheiten gegenwärtig grosse Aufmerksamkeit schenken .

Es ist bekannt , dass der organische Grundstoff einen grossen Anteil des festen Stadtmülls darstellt , und dessen Wiederverwertung ist somit eine bevorzugte Frage . Die generelle Tendenz ist jene den in den Abfällen enthaltenen organischen Grundstoff in einen Kompost umzuformen , welcher für landwirtschaftliche Zwecke verwendbar ist . Das Hauptproblem liegt dabei darin , dass diese Umformung des organischen Grundstoffes in einen Kompost eine bemerklich lange Zeitspanne in Anspruch nimmt und für ihre Beschleunigung es erforderlich ist , den organischen Grundstoff mit einer nahezu andauernden Beseitigung zu behandeln , derart um die Wirkung der aeroben Bakterien zu aktivieren , welche diese Umformung bewerkstelligen sollen .

Es treten jedoch bemerkenswerte Probleme auf um die Masse wieder zu bewegen , d.h. zu beseitigen , und sie mit Sauerstoff anzureichern , und diese Probleme sind von so grossem Belang , dass praktisch nach einer Reifung von mehreren Monaten noch kein eigentlicher Kompost vorliegen würde .

Die bis jetzt verwendeten Maschinen um für die Belebungsoperation zu sorgen haben sich gut bewährt , insofern sie arbeiten indem sie sich auf das Prinzip des Schneepfluges stützen , welcher den Schnee von einer Seite wegnimmt um ihn auf eine andere zu verlagern , oder der Maschinen , welche wie die Maschinen für die Erdbewegung arbeiten , aber diese Arbeitsgänge , bzw. Operationen , sind weder zufriedenstellend noch rasch und erfordern an Ort und Stelle die Gegenwart eines Bedienungsmannes , welcher diese Maschinen schalten muss .

Man verspürt somit die Notwendigkeit eine Maschine zu haben , welche es gestattet den auf einer Tenne liegenden organischen Grundstoff automatisch und auch mit fernliegender Steuerung zu beleben , indem diese Maschine auf den in Becken gesammelten organischen Grundstoff regulär und allenfalls programmiert einwirkt und für durchgehende Arbeitskreisläufe arbeiten kann , derart um eine maximale Ausbeutung und eine maximale Wirtschaft-

0060229

lichkeit zu erzielen .

Die erfindungsgemässe Maschine genügt den vorgenannten Erfordernissen und ist zugleich besonders wirtschaftlich und kräftig gebaut und weist eine äusserste Vielseitigkeit auf .

Die erfindungsgemässe Maschine dient zum Beleben des in Reifebecken liegenden organischen Materials , wobei es aus der Ladestellung in Richtung des Ausganges verschoben , mit Sauerstoff angereichert und gleichzeitig zerkleinert wird , bis es die Entlademündung erreicht . Der Arbeitsgang ist zyklisch , insofern die Maschine eine aktive Hinbewegung und eine passive Bewegung zum Rückkehren in den Ausgangspunkt hat , oder sie kann bei grösseren Anlagen auch auf ein anderes Bearbeitungsbecken verfahren werden .

Die erfindungsgemässe Maschine besteht im wesentlichen aus zwei untereinander zweckdienlich distanzierten und angemessen verbundenen Kopfteilen , derart um ein Portal zu bilden , wobei diese Kopfteile einen Rotor tragen , welcher das zweckdienlich und unabhängig angetriebene Arbeitsorgan des organischen Materials ist , indem jeder Kopfteil mit getrennten Translationsmitteln für die Bewegung während des Arbeitszyklus und für die raschere Bewegung des Rücklaufes versehen ist .

Der Erfindungsgegenstand wird beim Lesen der nachstehenden Beschreibung anhand der anliegenden Zeichnungen besser verständlich sein . In den Zeichnungen selbst zeigen :

Fig. 1 und 2 die die Maschine bildenden Kopfteile ;

Fig. 3 und 4 die Belebungsvorrichtung des organischen Materials in Stirnansicht , bzw. in Seitenansicht .

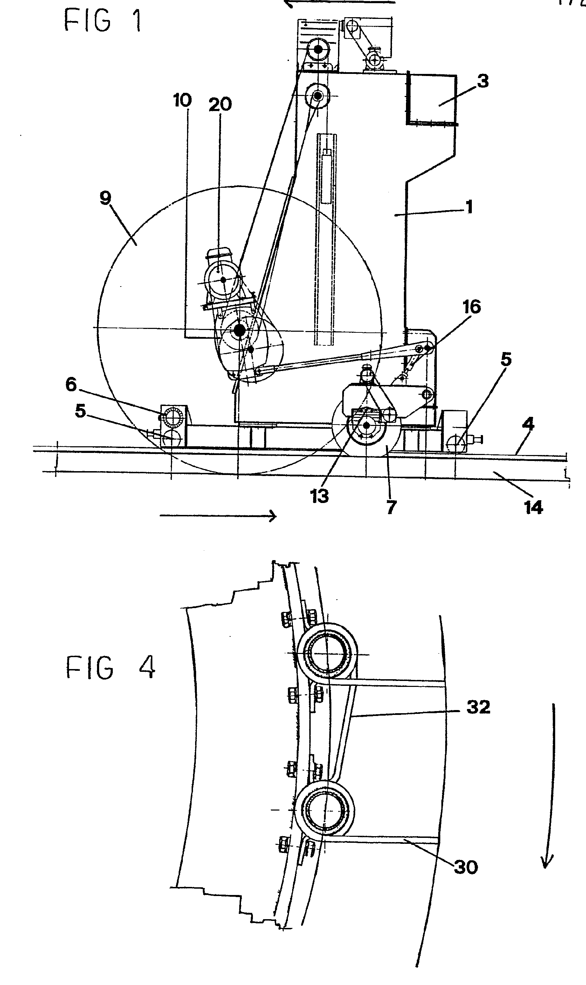

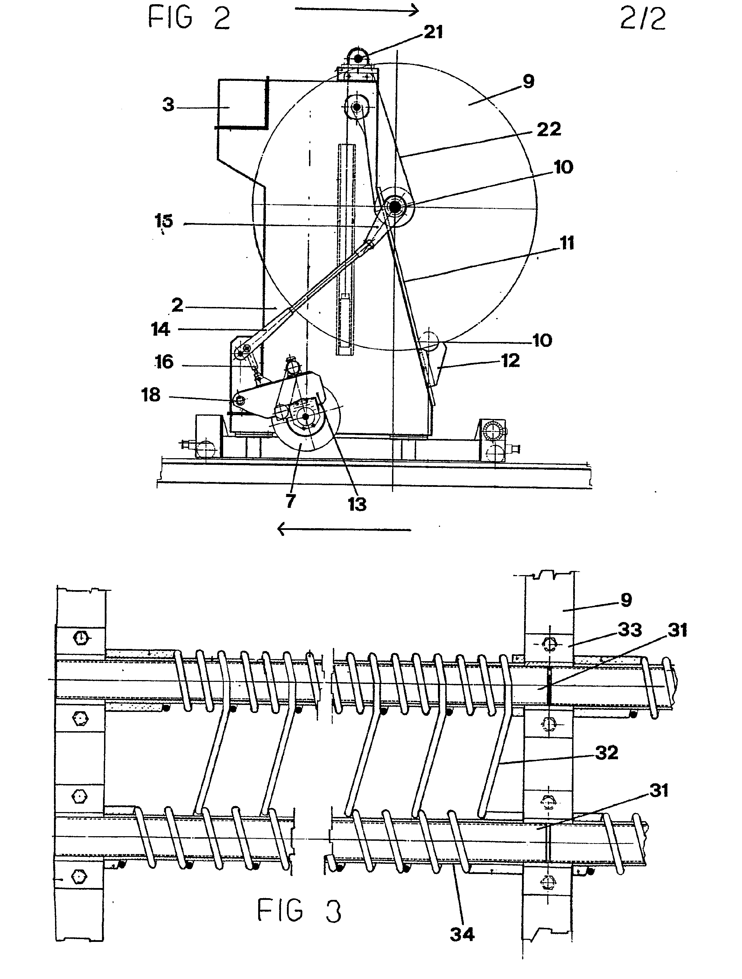

Bezugnehmend auf die beiden Zeichnungen und insbesondere auf die Figuren 1 und 2 besteht die erfindungsgemässe Maschine im wesentlichen aus zwei Kopfteilen 1 und 2 , welche miteinander durch einen Querträger 3 querverbunden sind . Wie vorstehend angedeutet sind die beiden Kopfteile mit eigenen Motorisierungen 13 versehen , welche in Synchronismus drehen und den beiden so verbundenen Kopfteilen bei besonders herabgesetzter Geschwindigkeit eine Translationsbewegung in einem Sinn , die Arbeitsbewegung , ausführen lassen , während der Rücklauf von einem anderen Motor 6 gesteuert wird , welcher die Verschiebung der beiden so portalartig verbundenen Kopfteile bei bemerkenswert höherer Geschwindigkeit gestattet .

Eine weitere aus einem Motor mit dazu gehörigem Untersetzungsgetriebe 20 bestehende Motorisierung ist an einer Seite oder an beiden Seiten unmittelbar auf der Hauptachse des Rotors montiert und setzt das Arbeitsorgan 9 des organischen Materials in Drehung .

Die Kopfteile 1 und 2 sind mit Stützlagern 12 versehen , in denen die Enden der Achse 10 des Arbeitsorgans 9 des organischen Materials zu lagern kommen . Die
Führung , an deren Boden das Stützlager 12 angebracht
ist , ist zweckdienlich geneigt für den Zweck , welcher
später erläutert wird . Jeder Kopfteil 1 und 2 läuft auf
Schienen 4 mittels Führungs- und Steuerräder 5 , welche
dazu dienen um der Gesamtheit des Portals 1-2-3 den Rückweg durchführen zu lassen .

Wie angedeutet soll die Vorschubbewegung in der Arbeitsrichtung des Portals 1-2-3 mit äusserst niedriger
Geschwindigkeit erfolgen , und zu diesem Zweck ist es mit
unabhängigen Getriebemotorsätzen 13 ausgerüstet , welche
die Antriebsräder 7 vorzugsweise mit einer Berührung
Gummi-Beton antreiben . Die Räder 7 laufen mit anderen
Worten auf zweckdienlich angeordneten und gearbeitet
Betonbahnen     mit der normalen Toleranz , wie sie im
Bauwesen üblich ist .

Der Getriebemotorsatz 13 hat die Eigenschaft dem
Rad eine zweckdienlich herabgesetzte Geschwindigkeit zu
verleihen und vorallem dem Rad zu gestatten sich zu
drehen nur wenn es vom Motor  gesteuert wird , u.zw.
verleiht er dem Rad eine nicht umkehrbare Bewegung .
Es konnte in der Tat festgestellt werden , dass bei
den vorgenommenen Versuchstests , wenn das Arbeitsor-

gan 9 des organischen Materials in Anspruch genommen ist , das Arbeitsorgan dazu neigt das Portal 1-2-3 mitzunehmen , wobei eine Beschleunigung im Vorschub mit negativen Einwirkungen auf das gesamte System verursacht wird , weshalb es unentbehrlich ist , dass die Räder 7 dieser Beschleunigung einen Widerstand leisten und die vorbestimmte Geschwindigkeit einhalten , indem sie als abbremsender Satz und nicht als mitnehmender Satz wirken . Um dies zu erreichen genügt es nicht , dass die Umdrehung der Räder 7 nicht umkehrbar ist , sondern es ist auch erforderlich , dass die Reibung zwischen dem Rad und der Rollbahn einen hohen Wert hat um dem Schlupf in der mitnehmenden Phase einen Widerstand zu leisten . Aus diesem Grund wurde das Binom Gummi-Beton gewählt , welches eine hohe Reibung bietet .

Vorstehend wurde angedeutet , dass das Portal 1-2-3 den Arbeitshub mit einer vorbestimmten Geschwindigkeit und den Rücklauf mit einer verschiedenartigen Geschwindigkeit durchführen muss , u.zw. um Totzeiten möglichst nachzuholen . Anderseits ist zu berücksichtigen , dass das Beleben des Materials in einem alleinigen Sinn stattfinden soll , weshalb das Arbeitsorgan des organischen Materials im Vorschubhub sich immer in einem Sinn dreht und im Rücklauf unwirksam verbleibt . Man wird sich erinnern , dass bereits erwähnt wurde , dass die Vorschubmittel des Brückenkarrens , u.zw. der Getriebemotorsatz 13 und das Rad 7 , dem Brückenkarren eine nicht umkehrbare Bewegung verleihen .

Damit der Brückenkarren , d.h. das Portal , den Rücklauf mit einer beliebigen und vorallem mit einer höheren Geschwindigkeit als jene von den Vorschubmitteln 13,7 ermöglichte Geschwindigkeit durchführen kann , ist es erforderlich , dass sich das Arbeitsorgan 9 des organischen Materials , d.h. der Rotor , vom Eingriff mit dem zu behandelnden organischen Material loslöst und die Räder 7 von der Rollbahn 14 gleichzeitig abgehoben werden . Dies geschieht dadurch , dass der Rotor 9 längs der bereits kurz erwähnten geneigten Führungen 11 hochgeführt wird und gleichzeitig der aus Getriebemotor 13 und zugeordnetem Rad 7 bestehende Satz der Langsamtranslation hochgehoben wird .

In der Tat durch Steuerung eines geeigneten Motors und eines auf einem der Kopfteile 1,2 untergebrachten und auf den anderen Kopfteil übertragenen zweckdienlichen Vorgeleges 21 ist es möglich , z.B. mittels einer Kette 22 , die Achse 10 des Rotors auf der geneigten Führung 11 laufen zu lassen und damit den Rotor selbst aus der Arbeitslage mit in den Stützlagern 12 aufliegender Achse 10 bis in eine Ruhelage hochzuheben . Wie aus der Zeichnung zu entnehmen ist , trägt die Achse 10 ihren Getriebemotorsatz 20 , welcher sie betätigt , und dank der geneigten Ebene liegt die Achse 10 auf den Führungen 11
durch Lager mit Nut einfach auf , welche dabei nur
eine axiale Verschiebung verhindern , d.h. die Verschiebung längs der Längsachse des Rotors selbst . Damit ist der Austrag des Rotors aus der restlichen Struktur äusserst einfach gestaltet .

Der auf der Achse 10 angebrachte Getriebemotorsatz
ist pendelnder Art und benötigt somit ein Mittel um das
Drehmoment aufzuheben , wenn der Motor sein Drehmoment
auf den Rotor überträgt . Dieses Mittel wurde mit dem
Zughebel 14 erhalten , welcher an einem Ende auf dem Untersetzungsgetriebe selbst hochklappbar ist , welches wie
erwähnt schwingend ist , und am gegenüberliegenden Ende
an einer festen Kupplung der Wange angelenkt ist . Während der Drehphase des Rotors verhindert der Hebel 14 ,
dass das Untersetzungsgetriebe durch die Einwirkung der
Rotation zum Drehen kommt , während während der aufgehobenen Phase der Hebel so angeordnet ist , um dem Unterseztungsgetriebe eine kleine Drehung durchführen zu lassen , zuerst in einem Sinn , nachher im anderen Sinn ,
ohne allerdings die Lage des Motorisierungssatzes 20
fühlbar zu verändern . An der gegenüberliegenden Wange ,
wenn eine zweite Motorisierung vorhanden sein sollte ,
wiederholt sich das Ganze genau wie vorstehend beschrie-

0060229

ben , sonst verwirklicht man das gleiche Hebelpaar mit demselben Hebel 14 und einem Hebel 15 , welcher den vom pendelnden Untetsetzungsgetriebe gebildeten Hebelarm ersetzt . Das Hebelpaar 14 ist an der Anlenkstelle mit den Kopfteilen 1,2 mit einer Übertragungsstange 16 versehen , welche an diesem angelenkt ist und am Lagerelement des Getriebemotors 13 und des Rades 7 gelenkig verbunden ist , wobei dieses Lagerelement bei 18 an demselben Element des Kopfteiles 1 oder 2 gelenkig verbunden ist . Diese Übertragungsstange 16 erfüllt eine doppelte Funktion , als Zugstange im Moment , in dem sich der Rotor 9 hochbewegt , und als Druckstange im Moment , in dem der Rotor 9 in seine Arbeitsstellung am Stützlager 12 gelangt . Wie man tatsächlich aus den Zeichnungen entnehmen kann , entwickelt sich die vom Rotor 9 über seine Achse 10 und den Komplex Untersetzungsgetriebe und Hebel 14 , oder Hebel 14 und 15 , ausgeübte senkrechte Kraft mittels der Übertragungsstange 16 am Lagerelement des Untersetzungsgetriebes 13 und des Rades 7 . Die Stellung der Achse 10 mit dazugehörigem Rotor 9 , des Hebels 14 , der Übertragungstange 16 und des Lagerelementes des Rades 7 und des Untersetzungsgetriebes 13 ist bei hochgestelltem Rotor eindeutig in der Fig. 2 zu erkennen , während in der Fig. 1 die Stellung derselben Organe angegeben ist , wenn sich der Rotor in der Arbeitstellung

0060229

befindet .

Im letzten in Fig. 1 veranschaulichten Fall ist
zu bemerken , dass das vom Rotor 9 und seinen Steuerelementen ausgeübte Gewicht auf das Rad 7 übertragen wird ,
welches folglich eine hohe und vorbestimmte Adhäsionskraft entwickelt . Die Übertragungsstange 16 ist dabei
zweckmässig ausgebildet , derart , um die Länge regeln
zu können .

Bisher wurde die erfindungsgemässe Maschine anhand
der Bau- und Schaltorgane derselben beschrieben . Der Betrieb der Maschine in der Gesamtheit müsste dem Fachmann
somit klar sein . Ein weiteres Merkmal der Erfindung ist
jedoch auch die besondere Gestaltung des Rotors 9 . Letztere ergibt sich im einzelnen aus den Figuren 3 und 4
der Zeichnungen , wo zu erkennen ist , dass der Rotor 9
aus einer Reihe von Scheiben , oder Rädern , besteht , an
deren Peripherie z.B. mittels verschraubter Bügel 33 Achsen 31 befestigt sind . Es genügt eine Reihe von distanzierten Scheiben um den Rotor 9 zu bilden . Das Organ ,
welches das organische Material tatsächlich behandelt ,
also das Element , welches zu Werke geht um das organische
Material anzuheben , mit Sauerstoff zu sättigen und zu
zerkleinern, ist in der Tat eine Reihe von Spitzen 30 ,
welche von den freien Enden einer Doppelspiralfeder 32
gebildet sind , die an zwei benachbarten Achsen 31 hineingesteckt ist .

Diese Vorkehrung dient dazu um die Doppelfeder
festzuhalten , welche bei diesen Bedingungen unter dem
von den Spitzen herrührenden Schub , wenn diese in das
Material eintauchen , sich nicht drehen kann , und dient
weiters dazu um einen einfachen Austausch der Federn
selbst zu ermöglichen . Die Verbindungsstrecke von einer
Spirale mit der anderen ist geneigt , derart , dass jede auf einer Achse 31 angeordnete Federnserie gegenüber
der auf der parallelen anderen Achse 31 aufgewickelten
Feder um einen halben Schritt versetzt ist . Es ergibt
sich somit , dass die freien Enden der Federn 32 , welche die Organe 30 bilden , die in das Bett vom organischen Material eingreifen , gegenüber den freien Enden
der auf den danebenliegenden Wellen angeordneten Federn
versetzt sind , und trotz Aufrechterhaltung eines gewissen Abstandes zwischen einem Ende 30 und dem anderen
einer gleichen Welle wird die Gesamtheit des organischen
Materials mit Aufeinanderfolge und mit im Sinne der Länge
der Arbeitswanne verminderten Räumen oder Schritten behandelt .

Zur bessere Vervollständigung der Einrichtung kann
zwischen der Achse 31 und der Feder 32 jeweils eine aus
selbstschmierenden Material , z.B. Plastikmaterial , bestehende Ummantelung 34 eingeschaltet sein , und dies um mögliche Geräusche zu vermeiden und vorallem um der Reibung Metall gegen Metall wirkungsvoll entgegenzuwirken , zumal das freie Ende 30 , d.h. die Spitze der Feder beim Arbeitseinsatz dazu neigt die Feder um die Achse 31 herum zu wickeln . Auch dies ist also eine notwendige Massnahme .

Aus der vorstehenden Beschreibung ist die Wirkungsweise der Maschine entnehmbar . Nachdem das zu behandelnde Material einmal in das Behandlungsbecken auf der Reifetenne eingebracht wurde , wird die Maschine mit dem Rotor 9 in Arbeitsstellung verschoben . Durch die Wirkung des gleichmässigen und regulierten Vorschubes der Maschine und der kombinierten Umdrehung des Rotors 9 wird das im Becken eingelagerte organische Material nach und nach ausgetragen , hochgehoben , mit Sauerstoff gesättigt usw. , wenn sich der Rotor 9 gegen das Ende des aktiven Hubes bewegt . Während dieses Hubes kommen die Spitzen 30 der Federn 32 mit dem organischen Material in Berührung und zerbröckeln dieses . Dieser Zerbröckelungsvorgang stellt sich gerade deshalb ein , weil das auf das zu behandelnde organische Material einwirkende Organ ein Organ von äusserst dünnen Proportionen und von solcher Formgebung ist , dass keine Verfestigung des organischen Materials verursacht wird . Der Schlag , welchen die Spitzen 30 dem organischen Grundstoff versetzen , und die folgliche Anhebung des organischen Grundstoffes nach oben führen eher zu einer Umrührung des organischen Grundstoffes selbst . Wenn das Portal 1-2-3 einmal am Ende des aktiven Hubes angelangt ist , beginnt der Hochhebemotor des Rotors 9 und des Komplexes Antriebsrad 7 zu funktionieren , derart um letzteres vom Eingriff mit der Rollbahn 14 zu befreien . Es greift nun der Rückkehrmotor 6 ein , welcher den gesamten Karren in die Ausgangsstellung bringt , wonach ein neuer Arbeitszyklus beginnen kann .

Es sei hier noch erwähnt , dass durch Betätigung der erforderlichen Steuerung sowohl der Vorwärtslauf als auch der Rückwärtslauf der Maschine an einer beliebigen Stelle des Beckens unterbrochen oder wiederaufgenommen werden kann .

Da der Arbeitsgang der Sättigung mit Sauerstoff , der Hochhebung , der Belebung , usw. der Masse des organischen Materials mit vorbestimmter Zeit und Art geschehen soll , ist es offensichtlich möglich , wenn man die Notwendigkeit erkennen sollte , für eine bessere Nutzbarmachung der Maschine selbst zu bewirken , dass sich die Maschine von einem Arbeitsbecken zu einem anderen verschiebt , indem man derselben gestattet die erforderliche Translation auszuführen , sobald sie am Ende des Hubes angelangt ist . Auf diese Art ist es möglich die Maschine mit dem Maximum ihrer Möglichkeiten nutzbar zu machen .

Bisher wurde nur einfach von Motoren gesprochen , und mit diesem Begriff beabsichtigte man Elektromotoren anzugeben . Es ist hier jedoch zu vergegenwärtigen , dass es in besonderen Fällen und vorallem im Falle einer besonders grossen Reifetenne geeignet sein könnte am Portal 1-2-3 einen Verbrennungsmotor zu installieren , welcher vorsieht die nötige Energie für die Motorisierung und die Steuerung der einzelnen von der Maschine durchzuführenden Handlungen zu liefern . In diesem Falle wird man vorzugsweise einen Verbrennungsmotor einbauen , welcher ein Fluid unter Druck liefert um Hydraulikmotoren zu betätigen , anstelle der Elektromotoren , und um sich somit vom Anschluss an Versorgungsnetze vollkommen unabhängig zu machen .

Weiters ist zu bemerken , dass die Spitzen 30 der Federn 32 mit einem besonders harten verschleissfesten Material überzogen werden könnten , d.h. also eine Verkleidung , die bei auftretendem Verschleiss ersetzt werden kann , obgleich angestellte Versuche in dieser Hinsicht einen praktisch belanglosen Verschleiss der Spitzen 30 zeitigten . Anderseits ist zu unterstreichen , dass das Lagerorgan des Schwenkpunktes des Hebels 14 und somit des Schwenkpunktes 18 des Satzes Motor 7-13 in der Höhe regulierbar ist , und diese Massnahme erlaubt es die Arbeitstiefe der Spitzen 30 zu regulieren , u.zw. in Abhängigkeit von der Höhe der Schicht , auf der gearbeitet wird , und vom etwaigen Verschleiss der Spitzen 30 .

Weiters ist zu erwähnen , dass das Arbeitsbecken ,

welches für die erfindungsgemässe Maschine erforderlich ist , im wesentlichen aus seitlichen Bahnen mit den

Schienen 4 und aus Endquerbalken gebildet ist . Der Grund , d.h. der Boden dieses Beckens besteht an sich nicht aus Beton oder anderem Material , sondern z.B. ganz einfach aus gestampfter Erde . Auf diesem Boden aus gestampfter Erde wird zu Beginn des Arbeitszyklus eine Schicht von organischem Grundstoff aufgebracht . Wenn nun einmal die Höhe festgelegt wurde , bei der die Spitzen 30 arbeiten sollen , hat man zwischen dem aus gestampfter Erde bestehenden Boden des Arbeitsbeckens und der unteren

Schicht , auf der die Spitzen 30 arbeiten , eine Dicke der organischen Grundstoffes , welche dort verbleibt und somit ein ausgezeichnetes Bett für die Bildung der erforderlichen Bakterien für die Gärung bildet und gleichzeitig dem Rotor 9 gestattet den Fehlern der Schienen 4 zu folgen ohne dass dabei der Boden oder die Spitzen 30 des Rotors 9 beschädigt werden .

Die Bauart der erfindungsgemässen Maschine zum Beleben von organischem Material gestattet es auf Behand-

0060229

lungsbecken beliebiger   geeigneter Länge zu wirken ,
wobei die Breite derselben alleinig von wirtschaftlichen
Erwägungen bestimmt wird . Wie vorstehend bereits erwähnt wurde , ist die Verbindung der beiden Kopfteile
1 und 2 vorzugsweise einem Kastenträger 3 anvertraut ,
welcher nicht nur eine steife Verbindung der beiden
Kopfteile 1,2 in der Querrichtung darstellt , sondern
den beiden Kopfteilen 1,2 auch gestattet sich gegeneinander zu bewegen , derart , dass sie sich den möglichen
Ungleichförmigkeiten der Schienen 4 einwandfrei anpassen können .

Es wäre auch zu erwähnen , dass während das Triebwerk 7-13 an beiden Seiten der Maschine vorgesehen sein
muss , d.h. also eines pro Kopfteil , der Satz , welcher
den Rotor 9 in Drehung versetzt , an einem Kopfteil oder
auch an beiden Kopfteilen vorzusehen ist .

Aus den vorstehenden Angaben ist leicht zu erkennen ,
dass die erfindungsgemässe Maschine nicht nur ein technisches sondern auch ein wirtschaftliches Problem löst ,
insofern eine alleinige Maschine auf einem gesamten Reifepark mit Unterteilung der Reifetenne in vorzugsweise
untereinander parallele Becken wirken kann . Die Maschine wird also gemäss einem vorbestimmten oder auch von
Fall zu Fall bestimmten Programm auf einem Schienenpaar
arbeiten , um nachher auf ein anschliessendes Schienen-

0060229

paar überzugehen , usw. .

Die Fragmente , in die sich die Masse des organischen Grundstoffes verwandelt , sind äusserst klein und befinden sich somit in der geeignetsten Lage sich der Sauerstoffsättigung und dem Angriff der aeroben Flora zu unterziehen ; nach vollendeter Reifung befindet sich das nun in Kompost umgewandelte organische Material wieder in der geeignetsten Lage für eine anschliessende Sieb- und Reinigungsbehandlung sei es mit volumetrischen Mitteln sei es in Luftströmen .

Weiters ist noch zu erwähnen , dass sich die sogeschaffene Maschine auch für die Vermischung mit dem ursprünglichen Material von anderen Substanzen , wie z.B. fester oder flüssiger biologischer Schlamm , eignet ; in der Tat liegt eine intensive Zerkleinerungs- und Vermischungshandlung des gesamten Materials vor , welche die Masse der verschiedenen Bestandteile rasch homogenisiert .

Ausgehend vom festen Stadtmüll , bringt das organische Material , welches in das Reifebecken eingebracht wird , trotz einer vorangehenden Durchsiebung natürlich Fremdelemente , wie Glasstücke oder dergleichen , mit sich , welche während des Reifevorganges in der ursprünglichen Stückgrösse verbleiben , während der eigentliche organische Grundstoff , welcher die vom Rotor 9 über dessen Spitzen gegebene Behandlung erfährt , sich im wesentlichen in eine pulverige Form verwandelt .

Die erfindungsgemässe Maschine zum Beleben von organischem Material in Reifetennen wurde vorstehend beispielsweise in nicht einschränkender Form beschrieben und erläutert . Es wären jedoch offensichtlicherweise noch alle jene Abänderungen , bzw. Verbesserungen technischer Natur möglich , welche sich bei der Herstellung und im praktischen Einsatz der Maschine als nützlich erweisen sollten , ohne dass damit vom ursprünglicher Erfindungsgedanken , welcher aus den nachfolgen Patentansprüchen nochmals hervorgeht , abgewichen wird .

SORAIN CECCHINI S.p.A. , Rom (Italien) .

"Maschine zum Beleben von organischem Material in Reifetennen"

Patentansprüche :

1.) Maschine zum Beleben des organischen Materials in Reifetennen , dadurch gekennzeichnet , dass sie im wesentlichen aus zwei oberhalb untereinander verbundenen Kopfteilen (1,2) besteht , welche jeweils mit einem Motor (13) für die Translation während des Arbeitshubes und mit einem Motor (6) für die Translation während des Rückhubes versehen sind , sowie aus einem Rotor (9) , welcher mit Eindringungsorganen (30) im Bett des organischen Materials bestückt ist , wobei dieser Rotor (9) von einem eigenen Aggregat (20) in Umdrehung versetzt wird .

2.) Maschine zum Beleben des organischen Materials in Reifetennen , nach Anspruch 1 , dadurch gekennzeichnet , dass das Aggregat , welches den Arbeitshub bewirkt , aus einem Getriebemotor (13) mit nicht umkehrbarer Bewegung und einem vorzugsweise gummibereiften Rad (7) besteht .

3.) Maschine zum Beleben des organischen Materials in Reifetennen , nach Anspruch 1 , dadurch gekennzeichnet , dass der Motor (6) , welcher für die Translation je eines Kopfteiles (1,2) im Rückhub sorgt , mit auf Schienen (4) laufenden Rädern (5) verbunden ist und dass während des Rückhubes das Aggregat gemäss Anspruch 2 von der Rollbahn abgehoben ist .

4.)Maschine zum Beleben des organischen Materials in Reifetennen , nach einem oder mehreren der vorstehenden Ansprüche , dadurch gekennzeichnet , dass die Achse (10) des Rotors (9) von einem Aggregat (20) in Umdrehung versetzt wird , welches auf der Achse des Rotors aufgezogen und mit einem Hebelsystem (14-15) verbunden ist , wobei die Hebeln (14-15) unter Aufhebung der Gegenwirkung des Rotors das Aggregat mit jedem Kopfteil (1,2) verbinden .

5.)Maschine zum Beleben des organischen Materials in Reifetennen , nach Anspruch 4 , dadurch gekennzeichnet , dass die Längsachse (10) des Rotors (9) in der Arbeitsstellung in einem auf jeder geneigten Führung (11) der Kopfteile (1,2) vorgesehenen Stützlager (12) ruht , wobei ein Mittel , z.B.ein geeigneter Motor  vorgesehen ist , welcher über (21) eine Umlenkkette (22) betätigt , um den Rotor (9) aus der Arbeitstellung bei der Rückkehr der Maschine zu Beginn des Zyklus hochzuheben .

6.)Maschine zum Beleben des organischen Materials in Reifetennen , nach einem oder mehreren der vorstehenden Ansprüche , dadurch gekennzeichnet , dass die Mitnehmermotoren (13) der Maschine im Arbeitshub auf einem in der Höhe regulierbaren Teil jedes Kopfteiles (1,2) angebracht sind , wobei an diesem Teil auch die Bindehebelgruppe der Achse (10) des Rotors (9) mit jedem der Kopfteile angelenkt ist , das Lager der Arbeitstranslationsgesamtheit ist dabei an der Gesamtheit der Bindehebel des Rotors mittels einer Übertragungsstange regulierbarer Länge (16) verbunden , welche wechselweise als Zugstange und als Druckstange wirkt .

7.) Maschine zum Beleben des organischen Materials in Reifetennen , nach Anspruch 1 , dadurch gekennzeichnet , dass der Rotor (9) aus einer Reihe von längs der Drehwelle (10) distanzierten und untereinander mittels an der Peripherie dieser Räder angeordneten Achsen (31) verbundenen Rädern besteht , welche Achsen (31) auf ihnen Doppelspiralfedern (32) aufnehmen , von denen eine Spirale auf einer Achse (31) und die andere Spirale auf der danebenliegenden Achse (31) aufgebracht ist und beide Spiralen in Spitzen (30) auslaufen , welche in radialer Richtung des Rotors austreten , um mit dem zu behandelnden organischen Material in Berührung zu kommen , derart um eine Gesamtheit von untereinander um einen halben Schritt versetzten Spitzen (30) zu bilden , wobei die auf einer Achse (31) montierte Spiralfeder (32) die auf der benachbarten Achse (31) montierte Spiralfeder (32) an einer beliebigen Bewegung hindert .

FIG 1

FIG 4

FIG 2

FIG 3